# EUROPÄISCHE PATENTSCHRIFT

(11) **EP 3 377 821 B1**
(45) Veröffentlichungstag und Bekanntmachung des Hinweises auf die Patenterteilung: **07.04.2021**
(21) Anmeldenummer: 16801985.9
(22) Anmeldetag: 14.11.2016
(51) Int. Cl.: F24C 15/20, H05B 6/12, A47J 36/38

(54) **VORRICHTUNG ZUR ZUBEREITUNG VON SPEISEN**
DEVICE FOR PREPARING FOOD
SYSTÈME DE PRÉPARATION DE PLATS

(30) Priorität: 16.11.2015 DE 102015119742
(43) Veröffentlichungstag der Anmeldung: 26.09.2018
(73) Patentinhaber: HS2 Engineering GmbH, 89079 Ulm (DE)
(72) Erfinder: HAAS, Karl-Heinz, 88480 Achstetten (DE); HUBER, Peter, 89129 Setzingen (DE)
(74) Vertreter: Raunecker, Klaus Peter
(86) Internationale Anmeldenummer: PCT/EP2016/077609
(87) Internationale Veröffentlichungsnummer: WO 2017/085026

(56) Entgegenhaltungen:
- EP-A1- 2 062 514
- EP-A2- 1 296 096
- WO-A1-2006/104318
- GB-A- 2 116 873
- US-A- 274 408
- US-A- 589 727

## Beschreibung

Die Erfindung betrifft eine Vorrichtung zur Zubereitung von Speisen nach dem Oberbegriff des Anspruchs 1.

In Flugzeugen werden Speisen üblicherweise mit besonderen Flugzeugkocheinrichtungen zubereitet. Flugzeuge im Linienbetrieb weisen dazu beispielsweise Heißluftöfen zur Erwärmung abgepackter Speisen auf. In individuell ausgestatteten Flugzeugen wird auch Kochgeschirr in Form von Töpfen, Pfannen und Woks eingesetzt. Diese werden dabei häufig mitsamt Deckel über Sicherheitsbügel auf der Kochstelle fixiert, wobei gleichzeitig mehrere Töpfe durch einen Schutzbügel festgehalten werden. Eine Fixierung des Kochgeschirrs ist wichtig, damit bei Flugturbulenzen keine heißen Speisen unkontrolliert in die Kabine gelangen. Diese Sicherheitsaspekte stellen besondere Anforderungen an die Gestaltung und die Handhabung von Flugzeugkocheinrichtungen.

So ist aus der Druckschrift EP BE- 1 596 694 B1 ein Gerät zur Erwärmung von Speisen bekannt. Es besteht aus einem mittels einer Tür verschließbaren Gehäuse, das für elektromagnetische Wellen eine abschirmende Wirkung in Richtung auf die Umgebung aufweist. Innerhalb des Gehäuses sind ein oder mehrere Funktionsböden aufgenommen, in denen eine oder mehrere Induktionsspulen integriert sind, um in Behältnissen aufgenommene Speisen induktiv für einen Verzehr erwärmen zu können. Zur Erhöhung der Betriebssicherheit ist an Stirnflächen der Funktionsböden, die in Richtung der Türöffnung des Gehäuses ausgerichtet sind, ein abschirmendes Element vorhanden. Jedes einzelne Element ist außerdem an Umgebungspotential oder an Erdpotential angeschlossen, um eine Abschirmung für elektromagnetische Wellen in Richtung auf die Umgebung, auch bei geöffneter Gehäusetür, gewährleisten zu können.

Des Weiteren ist aus der Druckschrift DE 10 2012 213 811 A1 eine Flugzeugkocheinrichtung mit einem Kochgeschirr und einem mit dem Kochgeschirr fest verbindbaren Deckel bekannt. Die Flugzeugkocheinrichtung ist auf einer Kochstelle fixierbar, wobei der Deckel mindestens ein bewegliches Element aufweist, durch dessen Bewegung eine Öffnung oder mehrere Öffnungen zum Innenraum des Kochgeschirrs freilegbar sind. Die Kochstelle kann auch mit Abzugshauben ausgestattet sein. Durch das Freilegen der Öffnung wird ein Zugang zum Innenraum des Kochgeschirrs ermöglicht. Es müssen dafür keine Schutzbügel oder Deckel abgebaut oder auf sonstige Weise entfernt werden. Eine Bewegung des beweglichen Elements reicht aus, um temporären Zugang zum Kochgut zu erlangen. Die Öffnung erlaubt dabei den Zugriff auf das Kochgut. Die Zugangsöffnung ist so groß, dass beispielsweise Zutaten zugegeben werden können oder ein Kochlöffel eingebracht werden kann. Das bewegliche Element kann verschiedenartig ausgestaltet sein, indem es radial oder tangential verschiebbar ist. Es kann beispielsweise auf einem Abschnitt einer Kreisbahn oder eines Spiralbogens verschoben werden. Eine tangentiale Bewegungsrichtung ist insbesondere bei runden Töpfen vorteilhaft, da diese Bewegungsrichtung in Umfangsrichtung gleichförmig zur Form des Topfes verläuft.

Eine weitere Vorrichtung zur Zubereitung von Speisen ist aus der Europäischen Patentanmeldung EP 1 296 096 A2 bekannt. In der genannten Schrift ist eine mobile Dunstabzugsvorrichtung offenbart, bei welcher eine Absaughaube über ein eine horizontale Drehachse aufweisendes Drehgelenk mit einem Ständer verbunden ist.

Aufgabe der vorliegenden Erfindung ist es, eine Vorrichtung zur Zubereitung von Speisen weiterzubilden.

Diese Aufgabe wird gelöst durch die Vorrichtung mit den Merkmalen des Anspruchs 1. Die Unteransprüche betreffen vorteilhafte Ausführungsformen und Varianten der Erfindung.

Die Erfindung schließt eine Vorrichtung zur Zubereitung von Speisen ein, umfassend eine Heizeinrichtung mit Heizplatte, eine Filtereinrichtung und eine mit der Filtereinrichtung in Wirkverbindung stehende Abdeckeinrichtung mit einer Oberseite, einer Unterseite und Seitenflächen. Die Abdeckeinrichtung weist an der Unterseite zumindest eine Eintrittsöffnung eines im Inneren der Abdeckeinrichtung angeordneten Strömungskanals für Abluft auf. Der Strömungskanal weist an einer ersten Seitenfläche eine Austrittsöffnung auf, wobei die Austrittsöffnung derart positionierbar ist, dass die Abluft über die Austrittsöffnung in eine Eintrittsöffnung der Filtereinrichtung strömen kann.

Erfindungsgemäß ist die Abdeckeinrichtung durch eine mehrarmige Mechanik in Form eines Parallelschwenkarms parallel verschiebbar.

Somit ist die Abdeckeinrichtung zumindest im Raum parallel verschiebbar angeordnet. Zur Parallelführung können entsprechende Lagerstellen, wie beispielsweise mittels Kugellagern aufeinander abgleitenden Schienen, eine kraftsparende bedienerfreundliche Unterstützung bieten. Die Abdeckeinrichtung kann als bewegliches Element direkt, beispielsweise über einen am beweglichen Element angebrachten Handgriff, bewegt und auf dem Kochgefäß positioniert werden.

Die Erfindung umfasst unter dem Begriff Zubereitung von Speisen auch die Zubereitung von Getränken oder die Erwärmung von Wasser. In diesem Zusammenhang und bei allen weiteren Ausgestaltungen der Erfindung soll der Begriff Speisen jegliche Art von Nahrungsmitteln umfassen.

Die Erfindung betrifft eine Kochstelle bevorzugt für Flugzeuge oder auch andere Transportmittel, die als relativ kleines Gerät auch auf engem Raum verbaut oder eingeschoben werden kann. Hierbei kann ein derartiges modulares und mobiles System platzsparend in ein Regal eingebaut und an das Bordnetz eines Flugzeuges angeschlossen werden. Die Kochstelle kann in einem Flugzeug als Einschub oder als Auf-Tisch-Version bei Bedarf unmittelbar in Betrieb genommen werden. Zur Zubereitung von Speisen ist eine Heizeinrichtung in Form einer flachen Heizplatte vorgesehen. Aus praktischen Gründen ist die Heizplatte der Kochstelle unmittelbar von einer Bedienperson bevorzugt von vorne her zugänglich und die Filtereinrichtung dahinter als Filterkasten angeordnet. Die Abdeckeinrichtung kann dabei beweglich am Filterkasten gehaltert sein.

Die erfindungsgemäße Vorrichtung weist eine Filtereinrichtung und eine mit der Filtereinrichtung in Wirkverbindung stehende Abdeckeinrichtung als integrierte Dunstabzugshaube auf. Die Wirkverbindung besteht darin, dass die bei der Speisenzubereitung entstehenden Dämpfe in einem Strömungskanal innerhalb der Abdeckeinrichtung hindurchgeführt werden und durch eine beispielsweise an einer Stirnseite befindliche Austrittsöffnung austreten und von dort aus unmittelbar in die Filtereinrichtung einströmen. Diese Austrittsöffnung an der Stirnseite ist folglich unmittelbar zur Eintrittsöffnung der Filtereinrichtung benachbart. Diese erste Seitenfläche an der Stirnseite kann zur Führung und Formung des Abluftstroms auch zusätzliche geeignete Mittel aufweisen.

Für jede Form und Größe eines Kochgefäßes ist die Abdeckeinrichtung so konzipiert, dass diese zur Zubereitung von Speisen das Kochgefäß gleich einem Deckel abdeckt. Die an der Unterseite der Abdeckeinrichtung vorhandene Eintrittsöffnung für die Abluft wird folglich auf dem nach oben offenen Koch- oder Bratgefäß positioniert.

Insbesondere die unterschiedliche Höhe der Kochgefäße macht es erforderlich, die Abdeckeinrichtung flexibel zu positionieren. Hierbei kann das Kochgefäß entweder komplett verschlossen werden oder ein definierter Spalt verbleiben, durch den Luft aus der Umgebung hindurch treten kann.

Dabei ermöglicht ein variabel einstellbarer Abstand der Abdeckeinrichtung zur Heizplatte, dass die an der Stirnseite befindliche Austrittsöffnung an einer langgestreckten Eintrittsöffnung der Filtereinrichtung entlang geführt werden kann.

Dringt von außen Frischluft hinzu, wird hierdurch die Abluft im Strömungskanal der Abdeckeinrichtung bereits so weit abgekühlt, dass sich beispielsweise das im Luftstrom mitgeführte Fett an der Wandung niederschlägt. Dieser gewünschte Effekt bewirkt, dass bereits von der Wandung des Strömungskanals ein Filtereffekt ausgeht. Durch das Hinzuführen von Frischluft wird auch einer Überhitzung vorgebeugt. Dennoch können an geeigneten Stellen Temperatursensoren oder Temperatursensorschaltelemente vorhanden sein, die bei Erreichen von vorgebbaren Maximaltemperaturen eine Abschaltung der Vorrichtung auslösen.

Ebenso kann im Abluftkanal ein Sensor zur Raucherkennung angeordnet sein. Dieser sicherheitstechnische Aspekt soll insbesondere beim Zubereiten von gebratenen Speisen eine Flammbildung im Gefäßinneren frühzeitig erkennen.

Der besondere Vorteil der Erfindung besteht darin, dass ein kompaktes, leichtes Gerät, insbesondere in Flugzeugen, ein sicheres und komfortables Zubereiten von Speisen ermöglicht. Unerwünschte oder unangenehme Gerüche werden durch die Filtereinrichtung herausgefiltert. Hierbei übt die Abdeckvorrichtung eine Mehrfachfunktion aus. Zudem dient sie als Spritzschutz, Dunstabzug und zur Sicherung der Kochgefäße. Eine einfache Fixierung des Kochgefäßes auf der Heizplatte ermöglicht auch eine Einhand-Bedienung bei der Zubereitung. Durch eine effiziente Filterung der Abluft kommt es zu keiner Geruchsbelästigung der Passagiere.

In vorteilhafter Ausgestaltung der Erfindung kann der Strömungskanal zwischen Eintrittsöffnung und Austrittsöffnung zumindest abschnittsweise eine mehrfache Umlenkung des Abluftstroms bewirken. Mehrfache Umlenkungen verlängern den Weg der Abluft und können in Verbindung mit einer beabsichtigten Wirbelbildung die Abluft bereits in der Abdeckeinrichtung ausreichend weit abkühlen, damit Fett abgeschieden wird. Insgesamt wird durch derartige Maßnahmen die Abluft so weit abgekühlt, das diese nach dem Durchtritt durch die Filtereinrichtung in die Umgebung ausgeblasen werden kann. Die Abdeckeinrichtung kann natürlich zum Reinigen des Strömungskanals mit wenigen Handgriffen zerlegt und wieder zusammengebaut werden.

Vorteilhafterweise kann der Strömungskanal zwischen Eintrittsöffnung und Austrittsöffnung zumindest abschnittsweise mäanderförmig ausgebildet sein. Hierdurch wird zur Abkühlung der Abluft und zur Fettabscheidung bereits in der Abdeckeinrichtung ein ausreichend langer Weg bis zur eigentlichen Filtereinrichtung geschaffen.

In einer alternativen Ausgestaltung kann der Strömungskanal zwischen Eintrittsöffnung und Austrittsöffnung Rippen, zapfenartige Auskragungen oder Gitter zur Umlenkung der Abluft aufweisen. Damit wird einerseits für die Abluft der Weg verlängert und andererseits effizient Wirbelzonen gebildet, an denen ein intensiver Wärmeaustausch mit der Kanalwand stattfindet, um eine frühzeitige Fettabscheidung zu bewirken.

In vorteilhafter Ausgestaltung der Erfindung kann im Strömungskanal ein Filter angeordnet sein. Zusätzliche Filter unterstützen den Effekt der Fettabscheidung im Strömungskanal. Hier können auch bereits Partikelfilter zum Einsatz kommen, um den Abluftstrom vorzureinigen.

Vorteilhafterweise kann der Filter aus Metallwolle oder aus offenporigem Metallschaum bestehen. Derartige Filtermaterialien können auch als Flammschutz dienen und durch ihre Kompaktheit in der Filterwirkung besonders effizient sein. Auch die Reinigung derartiger wieder verwendbarer Komponenten ist beispielsweise in Spülmaschinen möglich.

Daneben ist es auch denkbar, einen zusätzlichen Papierfilter mittels einer Halteeinrichtung vor der Eintrittsöffnung anzuordnen. Ein derartiger Papierfilter - welcher vorzugweise als Einmalfilter ausgebildet sein kann - trägt dazu bei, die Standzeiten der nachfolgenden Filtereinheiten zu erhöhen.

In weiterer Ausführungsform kann die Abdeckeinrichtung mit einer Flammensperre ausgestattet sein. Derartige Sperren können entweder durch iegelungsmechanismen wirken, die den entzündeten Abluftstrom blockieren oder aus porösen Keramikmaterialien oder aus offenporigem Metallschaum bestehen. Geeignete Temperatur- und/oder Feuersensoren können dabei das Überschreiten kritischer Temperaturen detektieren und eine Gefahrensituation anzeigen bzw. steuernd eingreifen.

Des Weiteren kann die Abdeckeinrichtung bevorzugt zwischen einer Offenstellung und einer Schließstellung verschiebbar sein. In der Offenstellung können die Gefäße zur Zubereitung der Speisen problemlos eingebracht oder wieder entfernt werden. In der Schließstellung kann die Abdeckeinrichtung als bewegliches Element verriegelbar ausgeführt sein. Die Verriegelung verhindert, dass die Abdeckeinrichtung ein Kochgefäß unerwünscht freigibt. Aus sicherheitstechnischen Gründen ist dies besonders im Luftverkehr unabdingbar. Auch kann beispielsweise bei bestimmten Flugmanövern oder Turbulenzen gewünscht sein, dass in der Schließstellung ein automatischer Verriegelungsmechanismus wirkt, der in Gefahrensituationen nicht gelöst werden kann. Hierbei helfen Beschleunigungs- oder Neigungssensoren, die Gefahrensituation anhand von Schwellwerten zu erkennen. Zwischen Offenstellung und der vorgesehenen Schließstellung kann die Abdeckeinrichtung jedoch auch so ausgeführt sein, dass diese in jeder Zwischenstellung fixierbar oder arretierbar ist.

In vorteilhafter Ausgestaltung der Erfindung kann die Abdeckeinrichtung zumindest in Schließstellung mit Federkraft beaufschlagt sein. Hierdurch wird ein automatischer Verschlussmechanismus erzeugt, der die Haltekraft auf das darunter angeordnete Kochgefäß ausgeübt. Hierbei kann ein mechanisches Federsystem eine Art Sicherungseinrichtung darstellen, welche in einer Gefahrensituation automatisch reagiert, sobald die Flugzeugbeschleunigung einen zulässigen Schwellwert überschritten hat. Hierzu umfasst die Flugzeugkocheinrichtung bevorzugt einen Beschleunigungssensor und Neigungssensor.

Erfindungsgemäß ist die Abdeckeinrichtung durch eine mehrarmige Mechanik in Form eines Parallelschwenkarms parallel verschiebbar. Durch eine Parallelverschiebung kann die Öffnung eines Kochgefäßes unmittelbar flächig abgedeckt und das Gefäß stabilisiert werden.

Vorteilhafterweise kann die mehrarmige Mechanik seitlich an der Filtereinrichtung sowie seitlich an zumindest einer der Seitenflächen der Abdeckeinrichtung ansetzen. Damit kann die Abdeckeinrichtung parallel über die Filtereinrichtung geschwenkt werden, um so die Öffnung eines Kochgefäßes freizugeben.

In besonders bevorzugter Ausgestaltung kann die Abdeckeinrichtung zusätzlich um zumindest eine Achse schwenkbar sein. Hierdurch kann das Freigeben der oberen Öffnung eines Kochgefäßes noch einfacher gestaltet werden, um das Kochgut zugänglich zu machen. Durch ein Schwenken kann auch die Unterseite mit der Eintrittsöffnung für die Abluft in einfacher Weise zugänglich werden. Gegebenenfalls kann dies für eine Reinigung der Unterseite zweckmäßig sein.

Vorteilhafterweise kann die Filtereinrichtung einen Ventilator zur Erzeugung eines Abluftstroms aufweisen. Bevorzugt ist der Ventilator auch regelbar, um die Intensität des Abluftstroms nach Bedarf steuern zu können.

In weiterer vorteilhafter Ausgestaltung der Erfindung kann die Filtereinrichtung mehrere in Strömungsrichtung hintereinander angeordnete Filter aufweisen. Hierdurch können Filter mit unterschiedlicher Funktion kombiniert werden. Beispielsweise können nach einer Fettabscheidung in einer im Abluftstrom nachgeordneten Position ein Partikelfilter und anschließend ein Kohlenstofffilter zur vollständigen Entfernung störender Gerüche aufeinanderfolgen. Derartige dreistufige oder auch mit einer Fettabscheidung vierstufige Filter sind besonders effizient.

In weiterer ergänzender Ausführungsform kann jeder Filter einzeln austauschbar sein. In der Filtereinrichtung sind die Filter mittels Halterungen so fixiert, dass diese auf einfache Weise herausgenommen oder eingeschoben werden können. Neben Einmalfiltern können auch reinigbare Filter zum Einsatz kommen.

Daneben kann auch eine integrierte Ausbildung eine Filterkassette, welche als bauliche Einheit sämtliche der Filtereinrichtung zugehörige Filter umfasst, vorhanden sein. In diesem Fall lässt sich in vorteilhafter Weise die gesamte Kassette auf einmal aus der Anordnung entnehmen. Hierdurch vereinfacht sich aufgrund der dann besseren Zugänglichkeit der einzelnen Filter die Wartung der Filtereinheit oder ein Austausch einzelner Filter erheblich.

Vorteilhafterweise kann die Heizplatte eine induktive Heizung aufweisen. Die Steuerung der induktiven Heizung kann mittels Nahfeldkommunikation NFC oder durch andere geeignete Steuerungseinrichtungen erfolgen. Der Energiebedarf für die Steuerung durch NFC liegt lediglich im Bereich von wenigen Watt. Die Elektronik und Regeltechnik ist darauf ausgelegt, dass wenig Leistung benötigt wird. Über Benutzer- und Kontrollanzeigen kann der Benutzer die Generatorleistung für die induktiven Spulen mit einer Zeitvorwahl an einem Bedienpanel auswählen. Moderne Bedienpanels erlauben eine Einstellung mittels direkter Anwahl oder durch sogenannte Slider mittels einer mit einem Finger ausgeführten Wisch- oder Ziehbewegung.

Bevorzugt kann zwischen der Heizplatte und der Abdeckeinrichtung ein Kochgefäß anordenbar sein. Die gesamte Anordnung und Dimensionierung der Vorrichtung soll den Einsatz unterschiedlicher Kochgefäße ermöglichen. Flache sowie im Volumen große und hohe Gefäße passen zwischen die flexibel anordenbare Abdeckeinrichtung und die Heizplatte.

In vorteilhafter Ausgestaltung der Erfindung kann das Kochgefäß eine Pfanne, ein Topf, ein Wok, ein Dampfgarer oder eine Vorrichtung zur Zubereitung von Reis sein.

Kochgefäße und insbesondere Pfannen können aus Materialien bestehen, die einen Überhitzungsschutz aufweisen. Diese Materialien haben einen Curie-Punkt beispielsweise zwischen 200°C und 250°C, oberhalb dessen das Material nicht mehr magnetisch ist und so einer Überhitzung vorbeugt. So kann durch die physikalischen Eigenschaften des Materials selbst, zusätzlich zur Steuerung und Regelung des Kochfeldes, die Sicherheit des Systems erhöht werden.

Weitere auf den Bedarf angepasste Kochgefäße sind die sogenannten Inductive-Apps. Es handelt sich um Kocheinrichtungen, die zur induktiven Kochstelle selbst über eine zusätzliche Steuerungs- und Regelungselektronik und zusätzliche induktive Komponenten und Temperatursensoren verfügen. Inductive-Apps werden induktiv und drahtlos mit Strom versorgt, auch die Datenübertragung erfolgt drahtlos. Hierzu haben Inductive-Apps ihre eigene autarke Steuerung, um eine intuitive Benutzung bei optimalem Kochergebnis und Servicequalität zu erzielen. Beispiele für Inductive-Apps sind Toaster, Reiskocher, Wok und Dampfgarer. Aber auch andere Küchengeräte wie Kaffeemaschine und Wasserkocher können auf dieser Basis funktionieren. Derartige Zusatzgeräte bedingen eine multiple und effektive Nutzung des begrenzten Arbeitsbereichs in einer Flugzeugbordküche und ermöglichen flexible Catering-Abläufe. Beispielsweise hat ein Reiskocher ein Fassungsvermögen von ca. 2,5 l und bereitet automatisch in einem Kochgefäß Reis, Suppe und weitere Speisen zu. So wird auch das Braten von Fleisch, Fisch, Eiern und Gemüse in Gastronomiequalität möglich.

Vorteilhafterweise kann zwischen der Heizplatte und der Abdeckeinrichtung eine Toastereinrichtung anordenbar sein. Die Toastereinrichtung ist ein weiteres Beispiel für eine Inductive-App, welche indirekt mit einer Sekundärspule beheizt wird. Über einen NFC-Steuerkreislauf beheizt die Sekundärspule die eigentlichen Heizelemente. Mittels einer intelligenten Zeitsteuerung können mehrere Toasts in den gewünschten Bräunungsstufen zubereitet werden. Auch eine Toastereinrichtung ist an das Abluftsystem der Filtereinrichtung angedockt, wodurch die Möglichkeit besteht, das Geräteinnere und die Außenwände aktiv zu kühlen. Durch die beschriebenen Inductive-Apps wird eine Minimierung des benötigten Strombedarfs und des Gesamtgewichts der Bordküche mit hoher Energieeffizienz und einer multiplen Nutzung der Kochgeräte möglich. Inductive-Apps können an geeigneten Orten während sie nicht benutzt werden verstaut werden.

Für die Identifikation des jeweiligen Einschubelementes können Elektromagnete oder Induktionsspulen zur Detektion lediglich kurzzeitig eingeschaltet werden und die Identifikation durch Erkennung des entweder vorhandenen oder nicht vorhandenen elektromagnetisch detektierbaren Elementes erfolgen.

Vorteilhafterweise kann das Kochgefäß oder die Toastereinrichtung an der Heizeinrichtung und/oder der Filtereinrichtung und/oder an der Abdeckeinrichtung durch ein Haltesystem arretierbar und wieder lösbar sein. Vorzugsweise ist das Kochgeschirr durch eine formschlüssige Verbindung auf der Heizplatte fixierbar. Die formschlüssige Verbindung ist vorzugsweise durch ein Gewinde, einen Niederhalter oder einen Schnellverschluss realisiert. Die formschlüssige Verbindung kann auch einen Bajonettverschluss oder Pins umfassen. Diese Fixierung erfolgt bevorzugt zunächst unabhängig von der Abdeckeinrichtung in Funktion eines Deckels. So wird das Kochgeschirr auch bei einer in Öffnungsstellung befindlichen Abdeckeinrichtung bereits zuverlässig gesichert. Eine Sicherung des Kochgeschirrs kann aber auch alleine oder zusätzlich durch die Abdeckeinrichtung in Schließstellung erfolgen.

Die Inductive-Apps können als Einschubelemente vor der eigentlichen Erwärmung vorbestückt und bei Bedarf dem Induktionsofen zugeführt werden, wobei dann die Erwärmung der Speisen innerhalb sehr kurzer Zeit, d. h. innerhalb weniger Minuten erreicht werden kann.

In vorteilhafter Ausgestaltung der Erfindung kann die Abdeckeinrichtung in der Schließstellung das Kochgefäß bzw. die Toastereinrichtung arretieren. Hierbei kann an der Filtereinrichtung oder an der Heizeinrichtung eine zusätzliche seitliche bevorzugt über eine Achse schwenkbare Arretierung vorteilhaft sein.

Vorteilhafterweise kann in der Abdeckeinrichtung ein weiterer Strömungskanal für Zuluft mit einer Eintrittsöffnung an der Unterseite der Abdeckeinrichtung ausgeführt sein, so dass Außenluft zugeführt werden kann. Hierdurch wird zusätzliche Frischluft in den Abluftstrom eingebracht, wodurch dieser abgekühlt wird. Dies ist ein wichtiger sicherheitstechnischer Gesichtspunkt, im Abluftstrom möglichst schnell eine ausreichend geringe Temperatur zu erlangen.

Vorteilhafterweise kann in Schließstellung zumindest eine Durchtrittsöffnung zwischen Kochgefäß und der Unterseite der Abdeckeinrichtung ausgebildet sein. Durchtrittsöffnungen dienen ebenfalls zur Frischluftzufuhr in den Abluftstrom. Hierbei kann es sich um zusätzliche meist ringförmige Aufsätze mit Ausnehmungen handeln, die beim Kochvorgang zwischen dem oberen Rand des Kochgefäßes und der Unterseite der Abdeckeinrichtung positioniert sind. Hierdurch wird über die Größe der Ausnehmungen der Frischluftstrom geregelt. Die Regelung des Zustroms an Frischluft kann auch über in der Größe variable Ausnehmungen erfolgen.

In vorteilhafter Ausgestaltung der Erfindung kann in Schließstellung die zumindest eine Durchtrittsöffnung spaltförmig oder kreisförmig ausgebildet sein. Hierdurch werden fensterartige Öffnungen ausgebildet, deren Öffnungsflächen zur Regelung des Luftstroms gegebenenfalls vergrößert oder verkleinert werden können. Hierzu können gegeneinander verschiebbare Doppelringe mit sich gegenseitig abdeckenden Durchtrittsöffnungen dienen.

Nachfolgend wird die Erfindung anhand der Zeichnungen exemplarisch erläutert. Es zeigen:
- Figur 1: Schematisch eine Schrägansicht einer Vorrichtung zur Zubereitung von Speisen;
- Figur 2: Schematisch eine weitere Schrägansicht einer Vorrichtung zur Zubereitung von Speisen mit einem zusätzlichen Kochgefäß;
- Figur 3: Schematisch eine vorderseitige Ansicht der Heizeinrichtung und der Filtereinrichtung;
- Figur 4: Schematisch eine rückseitige Ansicht der Heizeinrichtung und der Filtereinrichtung;
- Figur 5: Schematisch eine Schrägansicht der Abdeckeinrichtung;
- Figur 6: Schematisch eine Ansicht der Luftführung in der Filtereinrichtung und in der Abdeckeinrichtung;
- Figur 7: Schematisch eine Ansicht eines Kochgefäßes;
- Figur 8: Schematisch eine Ansicht einer Toastereinrichtung;
- Figur 9: Schematisch eine Bedieneinrichtung.

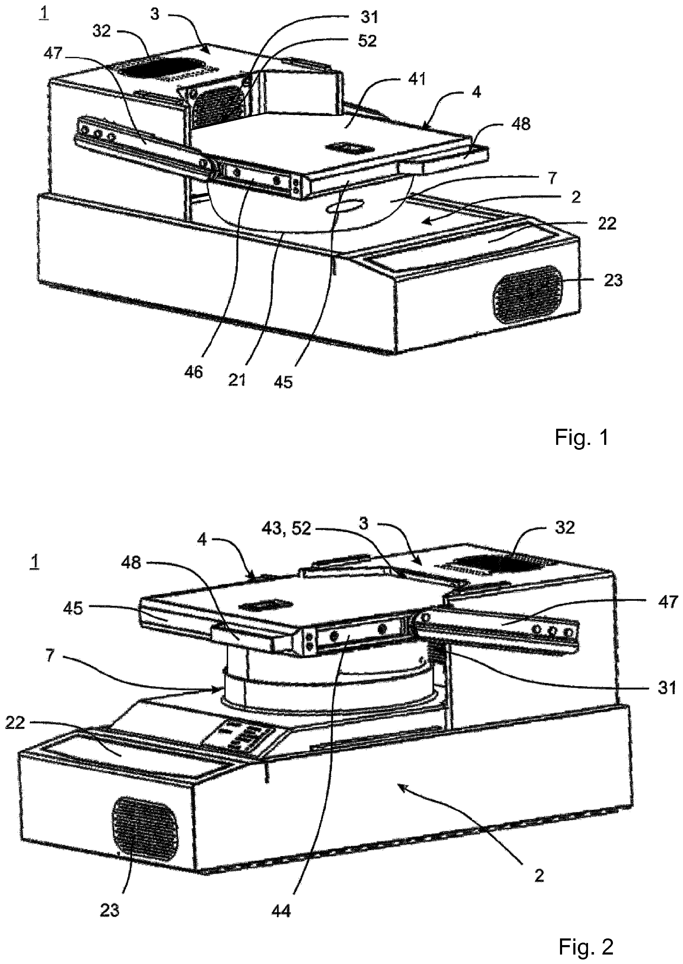

Fig. 1 zeigt schematisch eine Schrägansicht einer Vorrichtung 1 zur Zubereitung von Speisen. Der untere Teil der Vorrichtung 1 bildet die Heizeinrichtung 2 mit der Heizplatte 21 mit einem Bedienfeld 22 und einem Lüftungsgitter 23 für die Zufuhr von Kühlluft zur Induktionsspule und Steuerungs-/Regelungs-Elektronik.

Die Filtereinrichtung 3 ist auf der Heizeinrichtung 2 hinter der Heizplatte 21 angeordnet. Die Eintrittsöffnung der Filtereinrichtung 31 ist in senkrechter Richtung langgestreckt ausgebildet. Durch diese Eintrittsöffnung der Filtereinrichtung 31 tritt die Abluft des Kochvorganges ein, bis diese gefiltert und geruchsneutral durch die Austrittsöffnung der Filtereinrichtung 32 wieder in den umgebenden Raum abgegeben wird.

Die Abdeckeinrichtung 4 ist in diesem Falle in Schließstellung und über der oberen Öffnung einer Pfanne 7 als Kochgefäß positioniert. Über eine in der Figur nicht sichtbare Eintrittsöffnung in einen innerhalb der Abdeckeinrichtung 4 ausgebildeten Strömungskanal für Abluft gelangt die Abluft über die Austrittsöffnung des Strömungskanals 52 in die Eintrittsöffnung der Filtereinrichtung 31. Die Position der Austrittsöffnung des Strömungskanals 52 befindet sich an einer in der Schließstellung nicht mehr sichtbaren rückwärtigen ersten Seitenfläche der Abdeckeinrichtung 4. Mittels einer Verriegelungseinrichtung 41 ist die Abdeckeinrichtung 4 bevorzugt zerlegbar, so dass der darin befindliche Strömungskanal für Kontroll- oder Reinigungszwecke zugänglich ist. An der dritten Seitenfläche 45 ist ein Griff 48 angeordnet, mittels dem die Abdeckeinrichtung 4 von einer Offenstellung in eine Schließstellung verschoben werden kann. An der vierten Seitenfläche 46 ist eine mehrarmige Mechanik in Form eines Parallelschwenkarms 47 sichtbar, welche die Abdeckeinrichtung 4 in der Schließstellung zur Fixierung der Pfanne 7 ausreichend mit Kraft beaufschlagt.

In Fig. 1 ist gut erkennbar, dass die Eintrittsöffnung der Filtereinrichtung 31 in senkrechter Richtung langgestreckt ausgebildet ist und dabei von der Austrittsöffnung des Strömungskanals 52 im Regelfall nur teilweise abgedeckt wird. Auf diese Weise kann auch vergleichsweise kühle Außenluft in die Filtereinrichtung 3 eintreten, um die aus dem Kochvorgang stammende Abluft effizient abzukühlen.

Fig. 2 zeigt schematisch eine weitere Schrägansicht einer Vorrichtung 1 für die Zubereitung von Speisen mit einem Reiskocher 7 als Kochgefäß. In dieser Figur ist erkennbar, dass der Reiskocher 7 als Inductive-App durch sein Fassungsvolumen eine größere Höhe als eine Pfanne aufweist. Hierdurch wird die Abdeckeinrichtung 4 in der dargestellten Schließstellung in einem größeren Abstand zur Heizeinrichtung 2 angeordnet. Durch den Parallelschwenkarm 47 ist dies problemlos möglich. Die Austrittsöffnung des Strömungskanals 52 an der ersten Seitenfläche 43 der Abdeckeinrichtung 4 befindet sich dann immer noch unmittelbar vor der Eintrittsöffnung der Filtereinrichtung 31, wodurch die Abluft aus der Abdeckeinrichtung 4 zur Reinigung in die Filtereinrichtung 3 strömen kann. Insbesondere in einer Ausführung des Reiskochers 7 mit einem induktionsfähigen Topf können weitere Mittel zur thermischen Isolierung der Unterseite der Inducive-App vorhanden sein, so dass die Inductive App auch nach der Erwärmung ihres Inhaltes auf empfindlichen Flächen abgestellt werden kann.

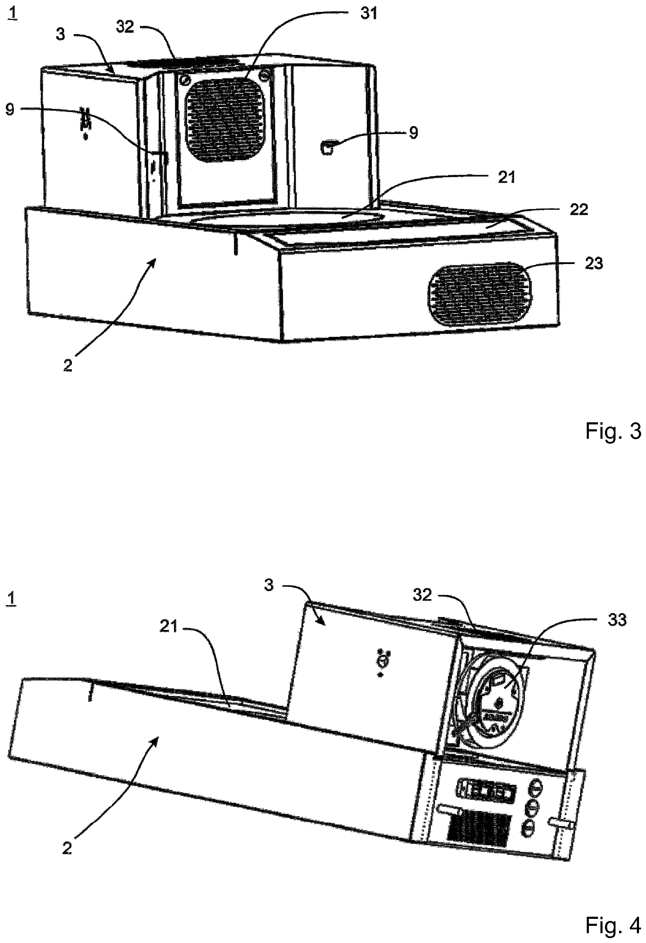

Fig. 3 zeigt schematisch eine vorderseitige Ansicht der Heizeinrichtung 2 und der Filtereinrichtung 3 ohne die Abdeckeinrichtung. Sichtbar ist nun die Eintrittsöffnung der Filtereinrichtung 31, die so dimensioniert ist, dass eine in der Höhe verstellbare Abdeckeinrichtung mit der Austrittsöffnung für die Abluft unmittelbar davor angeordnet werden kann. Im Betrieb sind die Filtereinrichtung 3 und die Abdeckeinrichtung in einem Minimalabstand zueinander positioniert, so dass im Übergangsbereich die Abluft nicht nach außen strömen kann.

In Fig. 3 ebenfalls sichtbar ist die induktive Heizplatte 21 der Heizeinrichtung 2. Diese im Regelfall ebene Kochstelle ist auch für alle unterschiedlichen Bodenabmessungen der Kochgefäße geeignet.

Das Haltesystem 9 sorgt bereits für eine sichere Arretierung bei der Anordnung eines Kochgefäßes vor der Inbetriebnahme. Hier handelt es sich um einen an der Filtereinrichtung 3 befestigten Winkel, der beispielsweise in eine obere Öffnung einer Pfanne eingreift und eine formschlüssige Verbindung bedingt. Diese Fixierung erfolgt bevorzugt zunächst unabhängig von der Abdeckeinrichtung in Funktion eines Deckels. So wird das Kochgeschirr auch bei einer in Öffnungsstellung befindlichen Abdeckeinrichtung bereits zuverlässig gesichert. Eine Sicherung des Kochgeschirrs kann aber auch alleine oder zusätzlich durch die Abdeckeinrichtung in Schließstellung erfolgen.

Fig. 4 zeigt eine rückseitige Teilansicht der Heizeinrichtung 2 und der Filtereinrichtung 3. Die rückseitige Abdeckblende der Filtereinrichtung 3 ist entfernt. Innerhalb der Filtereinrichtung 3 ist nun der Ventilator 33 sichtbar, der in der Regel im letzten Abschnitt des Abluftstroms unterhalb der Austrittsöffnung der Filtereinrichtung 32 angeordnet ist. Der Ventilator 33 ist am Ende des Abluftstroms angeordnet, da dieser ein relativ schlecht zu reinigendes Bauteil darstellt.

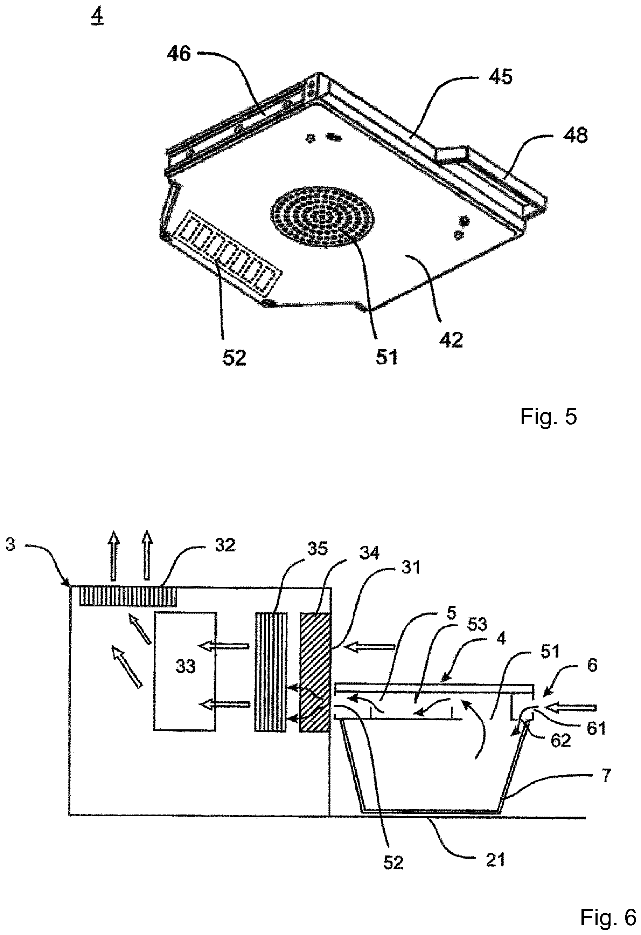

Fig. 5 zeigt schematisch eine Schrägansicht der Abdeckeinrichtung 4 als separates Bauteil. An der Unterseite 42 ist die Eintrittsöffnung des Strömungskanals 51 mittig angeordnet. Diese Eintrittsöffnung des Strömungskanals 51 zur Aufnahme der beim Kochvorgang entstehenden Dämpfe liegt im Betriebszustand zentral über der Öffnung eines Kochgefäßes. An der abgewandten ersten Seitenfläche der Abdeckeinrichtung 4 ist gestrichelt die Austrittsöffnung des Strömungskanals 52 angedeutet, die im Betrieb unmittelbar vor der Eintrittsöffnung der Filtereinrichtung angeordnet ist. An der dritten Seitenfläche 45 ist ein mit einer Hand komfortabel bedienbarer Griff 48 dezentral montiert. Die vierte Seitenfläche 46 zeigt die Verschraubungsstelle für eine mehrarmige Mechanik.

Fig. 6 zeigt schematisch eine Ansicht der Luftführung in der Filtereinrichtung 3 und in der Abdeckeinrichtung 4 der erfindungsgemäßen Vorrichtung. Von der darunter befindlichen Heizeinrichtung ist nur die Heizplatte 21 angedeutet.

Die Fig. 6 zeigt den Betriebszustand. Hierzu ist auf der Heizplatte 21 ein Topf 7 angeordnet. Der im Topf 7 entstehende Dampf wird über die Eintrittsöffnung des Strömungskanals 51 geleitet. Dies ist mit Pfeilen dargestellt, welche die Strömung der Abluft darstellen. Die Abdeckeinrichtung 4 umfasst in diesem Fall als Variante auch einen Strömungskanal für zusätzliche Zuluft 6, der über eine separate Eintrittsöffnung des Strömungskanals 61 und eine Austrittsöffnung des Strömungskanals 62 die Zuluft aus der Umgebung in das Innere des Topfes 7 zuführt. Dieser Luftstrom vermischt sich mit dem im Topf 7 entstehenden Dampf zum Abluftstrom, der durch den Strömungskanal für Abluft 5 geleitet wird. Auf dem Weg von der Eintrittsöffnung des Strömungskanals 51 zur Austrittsöffnung des Strömungskanals 52 befinden sich Rippen 53 die den Abluftstrom mehrfach umlenken und dabei eine Wirbelbildung verursachen. Die mehrfachen Umlenkungen verlängern den Weg der Abluft. Durch eine Wirbelbildung findet ein intensiver Wärmeaustausch mit der Kanalwand statt, wodurch die Abluft bereits in der Abdeckeinrichtung 4 ausreichend weit zur Fettabscheidung abgekühlt wird. Die Abdeckeinrichtung 4 kann zur Reinigung mit wenigen Handgriffen zerlegt und wieder zusammengebaut werden.

Über die unmittelbar vor der Eintrittsöffnung der Filtereinrichtung 31 angeordnete Austrittsöffnung des Strömungskanals 52 kann die Abluft durch einen ersten Filter 34, der beispielsweise zunächst die Partikel herausfiltert, geleitet werden. Danach gelangt die vorgefilterte Abluft in einen zweiten Filter 35, der beispielsweise als Karbonfilter störende Gerüche entfernt. Im weiteren Verlauf wird die gereinigte Abluft durch den Ventilator 33 über die Austrittsöffnung der Filtereinrichtung 32 an die Umgebung ausgeblasen.

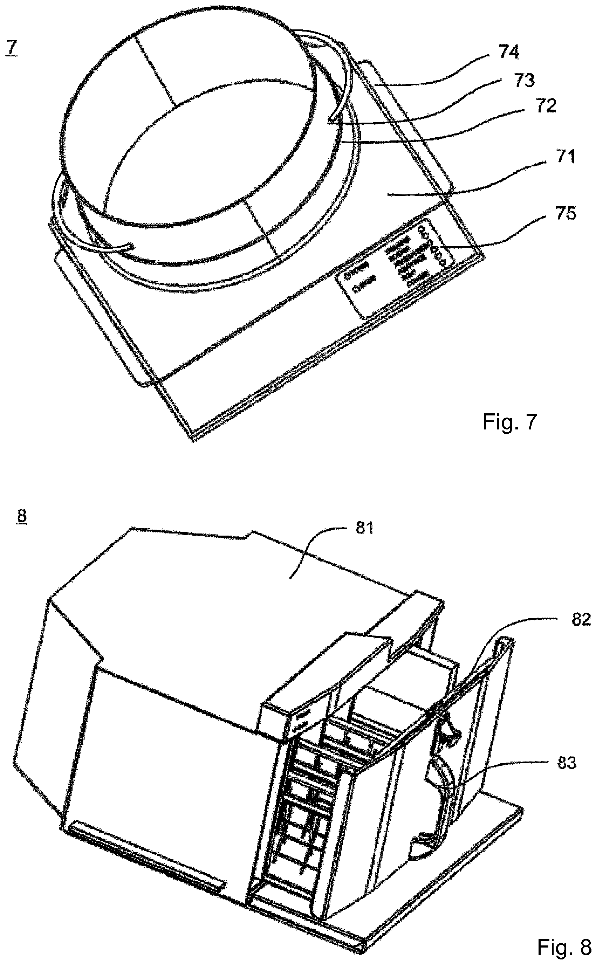

Fig. 7 zeigt schematisch eine Ansicht eines Kochgefäßes 7. Es handelt sich um einen Reiskocher, der als Inductive-App mit einer zusätzliche Steuerungs- und Regelungselektronik und einer zusätzlichen induktive Komponente ausgestattet ist. Hierzu haben diese Inductive-Apps eine eigene autarke Steuerung, die in der Handhabung mit der Steuerung der Heizplatte korrespondiert. Hierzu wird bevorzugt auch das Bedienfeld der Heizeinrichtung auf das Bedienfeld 75 des Kochgefäßes in der technischen Ausführung wie auch im Design einheitlich aufeinander abgestimmt und unmittelbar benachbart angeordnet. So wirken beide im Betrieb auf den Benutzer wie eine einheitliche Steuereinheit.

Bei der in Fig. 7 dargestellten Ausführungsform besteht das Kochgefäß 7 aus einer separaten Induktionskochstelle 71, auf der mittels eines Halterings 72 das Behältnis 73 angeordnet und dort sicher fixiert ist. Die Griffleiste 74 dient zum sicheren Handling zum Einbringen und zur Entnahme der Speisen nach dem Kochvorgang. Derartige Zusatzgeräte sind auch universeller einsetzbar und bieten eine effektive Nutzung des wertvollen Arbeitsbereichs in einer Flugzeugbordküche.

Es ist ebenso denkbar, die separate Induktionskochstelle 71 als passive Komponente ohne eigene Steuerungselemente und Heizelemente bzw. lediglich mit Elementen zur Anzeige eines Betriebszustandes vorzusehen.

In Fig. 8 ist schematisch eine Ansicht einer Toastereinrichtung 8 dargestellt. Dieser wird ebenfalls im Gebrauch zwischen der Heizeinrichtung 2 und der Abdeckeinrichtung 4 positioniert und durch Fixierungen sicher gehalten. Die Toastereinrichtung 8 bildet wiederum ein zuvor beschriebenes Inductive-App mit einem Gehäuse 81 und einer im Gehäuse 81 herausziehbaren Toasterschublade 82 mit einer nicht gesondert bezeichneten Arretiereinrichtung Zum besseren Handling ist an der Toasterschublade 82 ein Griff 83 montiert. Es ist darüber hinaus denkbar, eine zusätzliche Transportsicherung in Form eines seitlich an der Toastereinrichtung 8 angeordneten, in der Figur nicht gesondert dargestellten Hakens oder Riegels vorzusehen.

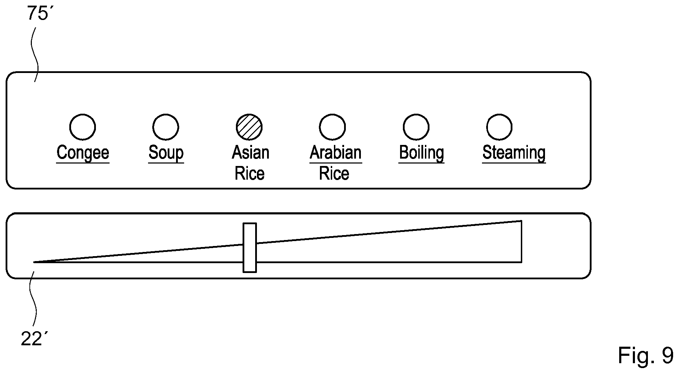

Figur 9 zeigt ein vorteilhaftes Bedienkonzept insbesondere zur Bedienung des Kochgefäßes 7 zur Zubereitung von Reisgerichten. In der in Figur 9 dargestellten Variante ist das Bedienfeld 22' als sogenannter Slider ausgebildet, welcher seitens eines Bedieners mittels einer Wischbewegung mit dem Finger und anschließendem Abheben des Fingers in der gewünschten Stellung oder durch direktes Antippen bedient werden kann. Dem Slider korrespondiert ein Anzeigefeld 75', welches auf dem in der Figur 9 nicht gesondert dargestellten Reiskocher 7 angeordnet ist. Das Anzeigefeld 7 bildet zusammen mit dem Slider eine integrierte, intuitiv zu bedienende Bedieneinheit.

### Bezugszeichenliste:

- 1: Vorrichtung

- 2: Heizeinrichtung
- 21: Heizplatte
- 22: Bedienfeld
- 23: Lüftungsgitter

- 3: Filtereinrichtung
- 31: Eintrittsöffnung der Filtereinrichtung
- 32: Austrittsöffnung der Filtereinrichtung
- 33: Ventilator
- 34: Filter
- 35: Filter

- 4: Abdeckeinrichtung
- 41: Verriegelungseinrichtung
- 42: Unterseite
- 43: erste Seitenfläche
- 44: zweite Seitenfläche
- 45: dritte Seitenfläche
- 46: vierte Seitenfläche
- 47: mehrarmige Mechanik; Parallelschwenkarm
- 48: Griff

- 5: Strömungskanal für Abluft
- 51: Eintrittsöffnung des Strömungskanals
- 52: Austrittsöffnung des Strömungskanals
- 53: Rippen

- 6: Strömungskanal für Zuluft
- 61: Eintrittsöffnung des Strömungskanals
- 62: Austrittsöffnung des Strömungskanals

- 7: Kochgefäß, Pfanne, Topf, Reiskocher
- 71: Induktionskochstelle Reiskocher
- 72: Haltering
- 73: Behältnis
- 74: Griffleiste
- 75: Bedienfeld

- 8: Toastereinrichtung
- 81: Gehäuse
- 82: Toasterschublade
- 83: Griff

- 9: Haltesystem

## Patentansprüche

1. Vorrichtung (1) zur Zubereitung von Speisen, umfassend eine Heizeinrichtung (2) mit Heizplatte (21), eine mit der Heizeinrichtung dauerhaft verbundene Filtereinrichtung (3) und eine mit der Filtereinrichtung (3) in Wirkverbindung stehende Abdeckeinrichtung (4) mit einer Oberseite, einer Unterseite (42) und Seitenflächen (43, 44, 45, 46), wobei
- die Abdeckeinrichtung (4) an der Unterseite (42) zumindest eine Eintrittsöffnung (51) eines im Inneren der Abdeckeinrichtung (4) angeordneten Strömungskanals (5) für Abluft aufweist
- und wobei der Strömungskanal (5) an einer ersten Seitenfläche (43) eine Austrittsöffnung (52) aufweist,
- die Abdeckeinrichtung (4) relativ zu der Filtereinrichtung (3) derart bewegbar ist, dass die Austrittsöffnung (52) derart positionierbar ist, dass die Abluft über die Austrittsöffnung (52) in eine Eintrittsöffnung (31) der Filtereinrichtung (3) strömen kann,
**dadurch gekennzeichnet, dass**
die Abdeckeinrichtung (4) durch eine mehrarmige Mechanik in Form eines Parallelschwenkarms (47) parallel verschiebbar ist.

2. Vorrichtung (1) nach Anspruch 1, **dadurch gekennzeichnet, dass**
der Strömungskanal (5) zwischen Eintrittsöffnung (51) und Austrittsöffnung (52) zumindest abschnittsweise eine mehrfache Umlenkung des Abluftstroms bewirkt.

3. Vorrichtung (1) nach einem der Ansprüche 1 oder 2,
**dadurch gekennzeichnet, dass**
im Strömungskanal (5) ein Filter angeordnet ist.

4. Vorrichtung (1) nach einem der Ansprüche 1 bis 3,
**dadurch gekennzeichnet, dass**
die Abdeckeinrichtung (4) mit einer Flammensperre ausgestattet ist.

5. Vorrichtung (1) nach Anspruch 1,
**dadurch gekennzeichnet, dass**
die Abdeckeinrichtung (4) zwischen einer Offenstellung und einer Schließstellung verschiebbar ist.

6. Vorrichtung (1) nach einem der Ansprüche 1 bis 5,
**dadurch gekennzeichnet, dass**
die Filtereinrichtung (3) mehrere in Strömungsrichtung hintereinander angeordnete Filter (34, 35) aufweist.

7. Vorrichtung (1) nach Anspruch 6,
**dadurch gekennzeichnet, dass**
jeder Filter (34, 35) einzeln austauschbar ist.

8. Vorrichtung (1) nach einem der Ansprüche 1 bis 7,
**dadurch gekennzeichnet, dass**
die Heizplatte (21) eine induktive Heizung aufweist.

9. Vorrichtung (1) nach einem der Ansprüche 1 bis 8,
**dadurch gekennzeichnet, dass**
zwischen der Heizplatte (21) und der Abdeckeinrichtung (4) ein Kochgefäß (7) angeordnet ist.

10. Vorrichtung (1) nach Anspruch 9,
**dadurch gekennzeichnet, dass**
das Kochgefäß (7) eine Pfanne, ein Topf, ein Wok, ein Dampfgarer oder eine Vorrichtung zur Zubereitung von Reis ist.

11. Vorrichtung (1) nach einem der Ansprüche 1 bis 10,
**dadurch gekennzeichnet, dass**
zwischen der Heizplatte (21) und der Abdeckeinrichtung (4) eine Toastereinrichtung (8) angeordnet ist.

12. Vorrichtung (1) einem der Ansprüche 9 bis 11,
**dadurch gekennzeichnet, dass**
das Kochgefäß (7) oder die Toastereinrichtung (8) an der Heizeinrichtung (2) und/oder der Filtereinrichtung (3) und/oder an der Abdeckeinrichtung (4) durch ein Haltesystem (9) arretierbar und wieder lösbar ist.

13. Vorrichtung (1) nach einem der Ansprüche 9 bis 12,
**dadurch gekennzeichnet, dass**
die Abdeckeinrichtung (4) in der Schließstellung das Kochgefäß (7) bzw. die Toastereinrichtung (8) arretiert.

## Claims

1. Apparatus (1) for preparing food, comprising a heating device (2) with hot plate (21), a filter device (3), which is permanently connected to the heating device, and a cover device (4), which is operatively connected to the filter device (3) and has a top side, a bottom side (42) and side surfaces (43, 44, 45, 46), wherein
- the cover device (4), on the bottom side (42), has at least one entry opening (51) of a flow channel (5) for exhaust air, said flow channel being arranged in the interior of the cover device (4),
- and wherein the flow channel (5), on a first side surface (43), has an exit opening (52),
- the cover device (4) can be moved relative to the filter device (3) in such a manner that the exit opening (52) can be positioned such that the exhaust air can flow via the exit opening (52) into an entry opening (31) of the filter device (3), **characterized in that**
the cover device (4) can be displaced in a parallel manner by a multi-arm mechanism in the form of a parallel pivoting arm (47).

2. Apparatus (1) according to Claim 1, **characterized in that**
the flow channel (5) causes multiple deflection of the exhaust-air stream at least in some regions between the entry opening (51) and exit opening (52).

3. Apparatus (1) according to either of Claims 1 and 2,
**characterized in that**
a filter is arranged in the flow channel (5).

4. Apparatus (1) according to one of Claims 1 to 3,
**characterized in that**
the cover device (4) is equipped with a flame barrier.

5. Apparatus (1) according to Claim 1,
**characterized in that**
the cover device (4) can be displaced between an open position and a closed position.

6. Apparatus (1) according to one of Claims 1 to 5,
**characterized in that**
the filter device (3) has a plurality of filters (34, 35) arranged one behind the other in the flow direction.

7. Apparatus (1) according to Claim 6,
**characterized in that**
each filter (34, 35) is individually interchangeable.

8. Apparatus (1) according to one of Claims 1 to 7,
**characterized in that**
the hot plate (21) has an inductive heater.

9. Apparatus (1) according to one of Claims 1 to 8,
**characterized in that**
a cooking vessel (7) is arranged between the hot plate (21) and the cover device (4).

10. Apparatus (1) according to Claim 9,
**characterized in that**
the cooking vessel (7) is a pan, a pot, a wok, a steam cooker or an apparatus for preparing rice.

11. Apparatus (1) according to one of Claims 1 to 10,
**characterized in that**
a toaster device (8) is arranged between the hot plate (21) and the cover device (4).

12. Apparatus (1) according to one of Claims 9 to 11,
**characterized in that**
the cooking vessel (7) or the toaster device (8) can be arrested on the heating device (2) and/or the filter device (3) and/or on the cover device (4), and released again, by a retaining system (9).

13. Apparatus (1) according to one of Claims 9 to 12,
**characterized in that**
the cover device (4), in the closed position, arrests the cooking vessel (7) or the toaster device (8).

## Revendications

1. Dispositif (1) pour la préparation de plats, comprenant un équipement de chauffage (2) muni d'une plaque chauffante (21), un équipement de filtration (3) relié de manière permanente avec l'équipement de chauffage, et un équipement de recouvrement (4) en liaison active avec l'équipement de filtration (3), muni d'un côté supérieur, d'un côté inférieur (42) et de surfaces latérales (43, 44, 45, 46),
- l'équipement de recouvrement (4) comprenant sur le côté inférieur (42) au moins une ouverture d'entrée (51) d'un canal d'écoulement (5) pour de l'air sortant agencé à l'intérieur de l'équipement de recouvrement (4 ,
- et le canal d'écoulement (5) comprenant sur une première surface latérale (43) une ouverture de sortie (52),
- l'équipement de recouvrement (4) pouvant être déplacé par rapport à l'équipement de filtration (3) de telle sorte que l'ouverture de sortie (52) puisse être positionnée de telle sorte que l'air sortant puisse s'écouler par l'intermédiaire de l'ouverture de sortie (52) dans une ouverture d'entrée (31) de l'équipement de filtration (3),
**caractérisé en ce que**
l'équipement de recouvrement (4) peut être décalé parallèlement par un mécanisme à plusieurs bras sous la forme d'un bras de pivotement parallèle (47).

2. Dispositif (1) selon la revendication 1, **caractérisé en ce que** le canal d'écoulement (5) réalise au moins en sections une déviation multiple du courant d'air sortant entre l'ouverture d'entrée (51) et l'ouverture de sortie (52).

3. Dispositif (1) selon l'une quelconque des revendications 1 ou 2, **caractérisé en ce qu'**un filtre est agencé dans le canal d'écoulement (5).

4. Dispositif (1) selon l'une quelconque des revendications 1 à 3, **caractérisé en ce que** l'équipement de recouvrement (4) est équipé d'une barrière antifeu.

5. Dispositif (1) selon la revendication 1, **caractérisé en ce que** l'équipement de recouvrement (4) peut être décalé entre une position d'ouverture et une position de fermeture.

6. Dispositif (1) selon l'une quelconque des revendications 1 à 5, **caractérisé en ce que** l'équipement de filtration (3) comprend plusieurs filtres (34, 35) agencés les uns après les autres dans la direction d'écoulement.

7. Dispositif (1) selon la revendication 6, **caractérisé en ce que** chaque filtre (34, 35) peut être remplacé individuellement.

8. Dispositif (1) selon l'une quelconque des revendications 1 à 7, **caractérisé en ce que** la plaque chauffante (21) comprend un chauffage inductif.

9. Dispositif (1) selon l'une quelconque des revendications 1 à 8, **caractérisé en ce qu'**un récipient de cuisson (7) est agencé entre la plaque chauffante (21) et l'équipement de recouvrement (4).

10. Dispositif (1) selon la revendication 9, **caractérisé en ce que** le récipient de cuisson (7) est une poêle, une casserole, un wok, un cuiseur vapeur ou un dispositif pour la préparation de riz.

11. Dispositif (1) selon l'une quelconque des revendications 1 à 10, **caractérisé en ce qu'**un équipement de grille-pain (8) est agencé entre la plaque chauffante (21) et l'équipement de recouvrement (4) .

12. Dispositif (1) selon l'une quelconque des revendications 9 à 11, **caractérisé en ce que** le récipient de cuisson (7) ou l'équipement de grille-pain (8) peut être bloqué sur l'équipement de chauffage (2) et/ou l'équipement de filtration (3) et/ou sur l'équipement de recouvrement (4) par un système de maintien (8), et de nouveau détaché.

13. Dispositif (1) selon l'une quelconque des revendications 9 à 12, **caractérisé en ce que** l'équipement de recouvrement (4) bloque le récipient de cuisson (7) ou l'équipement de grille-pain (8) dans la position de fermeture.
